(19) Europäisches Patentamt
European Patent Office
Office européen des brevets

(11) **EP 3 488 520 B1**

(12) **EUROPÄISCHE PATENTSCHRIFT**

(45) Veröffentlichungstag und Bekanntmachung des Hinweises auf die Patenterteilung:
**08.04.2020   Patentblatt 2020/15**

(21) Anmeldenummer: **17733969.4**

(22) Anmeldetag: **23.06.2017**

(51) Int Cl.:
*H02M 7/81* (2006.01)        *H02M 7/797* (2006.01)
*H02M 1/00* (2006.01)        *H02M 5/458* (2006.01)
*H02P 23/06* (2016.01)        H02M 7/42 (2006.01)
H02M 7/06 (2006.01)        H02M 7/219 (2006.01)
H02M 7/5387 (2007.01)        H02M 1/42 (2007.01)

(86) Internationale Anmeldenummer:
**PCT/EP2017/025178**

(87) Internationale Veröffentlichungsnummer:
**WO 2018/015023 (25.01.2018 Gazette 2018/04)**

(54) **UMRICHTERSYSTEM UND VERFAHREN ZUM BETREIBEN EINES UMRICHTERSYSTEMS**

CONVERTER SYSTEM AND METHOD FOR OPERATING A CONVERTER SYSTEM

SYSTÈME CONVERTISSEUR ET PROCÉDÉ DE FONCTIONNEMENT D'UN SYSTÈME CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2016   DE 102016008658**

(43) Veröffentlichungstag der Anmeldung:
**29.05.2019   Patentblatt 2019/22**

(73) Patentinhaber: **SEW-Eurodrive GmbH & Co**
**76646 Bruchsal (DE)**

(72) Erfinder: **PFEIFFER, Georg**
**88276 Berg (DE)**

(56) Entgegenhaltungen:
**EP-A2- 1 538 736     DE-A1-102005 042 318**

EP 3 488 520 B1

**Beschreibung**

Die Erfindung betrifft ein Umrichtersystem und ein Verfahren zum Betreiben eines Umrichtersystems.

Es ist allgemein bekannt, dass bei einem Umrichtersystem ein Motor drehzahlgeregelt betreibbar ist. Im generatorischen Betrieb des Motors wird allerdings elektrische Leistung vom Motor über den den Motor speisenden Wechselrichter des Umrichtersystems in den Zwischenkreis des Umrichtersystems rückgespeist.

Aus der DE 10 2012 002 089 A1 ist ein Antriebssystem mit Energiespeicher bekannt.

Aus der DE 10 2014 222 475 A1 ist ein Übertragungssystem zum kontaktlosen Übertragen von Energie an ein Fahrzeug bekannt.

Aus der DE 10 2011 017 601 A1 ist ein Ansteuerverfahren für einen Wechselrichterbekannt.

Aus der DE 10 2015 113 632 A1 ist ein Wechselrichter bekannt.

Als Leiterspannung wird die Differenz zweier Phasenspannungen eines Wechselstromnetzes bezeichnet. Als Phasenspannung wird die Spannung zwischen Netzphase und einem Neutralleiter bezeichnet.

Aus der EP 1 538 736 A2 ist als nächstliegender Stand der Technik ist ein Antriebssystem bekannt.

Aus der DE 10 2005 042 318 A1 ist eine Fördereinrichtung bekannt.

Der Erfindung liegt daher die Aufgabe zugrunde, ein Umrichtersystem und ein Verfahren zum Betreiben eines Umrichtersystems weiterzubilden, wobei ein gefährlich hoher Anstieg der Zwischenkreisspannung vermieden werden soll, indem eine Rückspeisung ins Wechselspannungsversorgungsnetz weitergebildet werden soll.

Erfindungsgemäß wird die Aufgabe bei dem Umrichtersystem nach den in Anspruch 1 und bei dem Verfahren nach Anspruch 8 angegebenen Merkmalen gelöst.

Wichtige Merkmale der Erfindung bei dem Umrichtersystem mit insbesondere blockförmiger Rückspeisung sind, dass es zumindest

- einen, insbesondere in ein 3-Phasen Wechselspannungsversorgungsnetz, rückspeisefähigen Gleichrichter, insbesondere einen rückspeisefähigen ersten Wechselrichter,
- einen DC/DC-Wandler mit Ansteuereinheit,
- einen von einem zweiten Wechselrichter speisbaren Elektromotor

aufweist,
wobei der gleichspannungsseitige Anschluss des zweiten Wechselrichters mit einem ersten Anschluss des DC/DC-Wandlers verbunden ist,
wobei ein Stromerfassungsmittel zur Erfassung des von dem DC/DC-Wandler an den gleichspannungsseitigen Anschluss des rückspeisenden ersten Wechselrichters geführten Stromes verbunden ist mit einer Ansteuereinheit,
so dass die vom Stromerfassungsmittel erfassten Stromwerte der Ansteuereinheit zugeführt werden,
wobei die Ansteuereinheit dazu eingerichtet ist, dem DC/DC-Wandler derartige Ansteuersignale zuzuführen, dass die vom DC/DC-Wandler dem rückspeisenden ersten Wechselrichter zur Verfügung gestellte Spannung den erfassten Strom auf einen Sollwerteverlauf hin regelt, wobei das Sollwerteverlauf an den Zeitpunkten des Nulldurchgangs einer jeweiligen Leiterspannung des 3-Phasen Wechselspannungsversorgungsnetzes und an den Zeitpunkten eines jeweiligen Schnittpunktes der Phasenspannungen eine Nullstelle stetig differenzierbar durchläuft.

Von Vorteil ist dabei, dass zwar der rückzuspeisende Strom vorgebbar ist, jedoch wird das Rückspeisen im Bereich der Nulldurchgänge der Leiterspannungen des 3-Phasen Wechselspannungsversorgungsnetzes stetig auf Null herunterfahrbar und wieder hochfahrbar.

Durch dieses glatte Reduzieren des Sollwerts und wieder Hochfahren des Sollwerts werden Störströme und Schwingungsneigung des Systems reduziert, also ein stabiles Betriebsverhalten in einfacher Weise erreichbar. Insbesondere ist ein netzverträgliches Rückspeisen mit der blockförmigen Rückspeisung ermöglicht. Eine sinusförmige Rückspeisung ist somit einsparbar.

Bei einer vorteilhaften Ausgestaltung sind mit der Ansteuereinheit Mittel zur Erfassung der Phasenspannungen des Wechselspannungsversorgungsnetzes verbunden,
so dass die Ansteuereinheit zur Bestimmung von Zeitpunkten der Nulldurchgänge der Leiterspannungen geeignet ausgeführt ist und zur Bestimmung des Sollwerteverlaufs, wobei der Sollwerteverlauf an den Zeitpunkten der Nulldurchgänge verschwindet, insbesondere also den Wert Null erreicht, und/oder in den Bereichen der von der Ansteuereinheit bestimmten Nulldurchgänge jeweils glatt, insbesondere also stetig differenzierbar, ausgeführt ist,
insbesondere wobei der Sollwerteverlauf an den Zeitpunkten der Nulldurchgänge verschwindet, insbesondere also den Wert Null erreicht, und/oder in den jeweiligen zeitlichen Bereichen um die Zeitpunkte der Nulldurchgänge herum jeweils glatt, insbesondere also stetig differenzierbar, ausgeführt ist. Von Vorteil ist dabei, dass das Regeln des Stromes in einfacher Weise ausführbar ist. Durch den glatten Verlauf in den Bereichen ist ein besonders gut netzverträgliches Verhalten erreichbar.

Bei einer vorteilhaften Ausgestaltung verläuft der Sollwerteverlauf in den Bereichen der Nulldurchgänge, insbesondere in den jeweiligen zeitlichen Bereichen um die Zeitpunkte der Nulldurchgänge herum, jeweils entsprechend einer geraden Potenz einer netzsynchronen Sinusfunktion oder einem Polynom geradzahliger Ordnung entsprechend. Von Vorteil ist dabei, dass ein besonders gut netzverträgliches Verhalten erreichbar ist.

Bei einer vorteilhaften Ausgestaltung verläuft der Sollwerteverlauf zwischen den Bereichen jeweils konstant. Von Vorteil ist dabei, dass ein Sollwert für den aus dem Zwischenkreis rückzuspeisenden Strom vorgebbar ist.

Bei einer vorteilhaften Ausgestaltung umfasst jeder Bereich jeweils genau einen einzigen Zeitpunkt, zu dem ein Nulldurchgang einer der Leiterspannungen stattfindet. Von Vorteil ist dabei, dass ein glattes Zurückfahren des rückgespeisten Stromes zu jedem Nulldurchgang der Spannung ermöglicht wird. Somit ist eine gute Netzverträglichkeit beim Rückspeisen erreichbar.

Bei einer vorteilhaften Ausgestaltung ist das Umrichtersystem einen Gleichrichter aufweist, dessen gleichspannungsseitiger Anschluss ebenfalls mit dem gleichspannungsseitigen Anschluss des zweiten Wechselrichters verbunden und dessen wechselspannungsseitiger Anschluss ist mit dem Wechselspannungsversorgungsnetz verbunden. Von Vorteil ist dabei, dass ein bestehender Umrichter mit der blockförmigen Rückspeisung, also einem von einem DC/DC-Wandler aus dem Zwischenkreis des Umrichters versorgten, rückspeisenden Wechselrichter nachrüstbar ist.

Bei einer vorteilhaften Ausgestaltung ist an dem jeweiligen gleichspannungsseitigen Anschluss ein Kondensator angeordnet, insbesondere zur Glättung der Spannung. Von Vorteil ist dabei, dass eine verbesserte Regelung ausführbar ist, insbesondere ein stabileres Regelverhalten erreichbar ist, da die gestellte Spannung weniger Schwenkungen aufweist.

Wichtige Merkmale bei dem Verfahren zum Betreiben eines Umrichtersystems sind, dass mittels des DC/DC-Wandlers der dem ins Wechselspannungsversorgungsnetz rückspeisenden Wechselrichter zugeführte Strom auf einen Sollwerteverlauf hin geregelt wird, der in den jeweiligen zeitlichen Bereichen um die Zeitpunkte der Nulldurchgänge der Leiterspannungen des Wechselspannungsversorgungsnetzes herum jeweils glatt, insbesondere also stetig differenzierbar, ausgeführt ist.

Von Vorteil ist dabei, dass ein netzverträgliches Rückspeisen ausführbar ist. Denn das glatte Herunterfahren auf Null und nachfolgendes Hochfahren ermöglicht, dass bei Nulldurchgängen kein Strom rückgespeist wird.

Wichtige Merkmale bei dem Verfahren zum Betreiben eines Umrichtersystems sind, dass mittels eines DC/DC-Wandlers der von einem rückspeisefähigen Gleichrichter ins 3-Phasen wechselspannungsversorgungsnetz zugeführte Strom, insbesondere der dem ins Wechselspannungsversorgungsnetz rückspeisenden Wechselrichter zugeführte Strom, auf einen Sollwerteverlauf hin geregelt wird, wobei der Sollwerteverlauf an den Zeitpunkten des Nulldurchgangs einer jeweiligen Leiterspannung des 3-Phasen Wechselspannungsversorgungsnetzes und an den Zeitpunkten eines jeweiligen Schnittpunktes der Phasenspannungen eine Nullstelle stetig differenzierbar durchläuft.

Von Vorteil ist dabei, dass trotz der blockförmigen Betriebsweise eine weiche Rückspeisung ausführbar ist.

Bei einer vorteilhaften Ausgestaltung weist der Sollwerteverlauf keine positiven Werte auf. Von Vorteil ist dabei, dass dauerhaft keine Leitungsentnahme aus dem Wechselspannungsversorgungsnetz auftritt.

Bei einer vorteilhaften Ausgestaltung ist der Sollwerteverlauf in den Bereichen der Nulldurchgänge jeweils glatt, insbesondere also stetig differenzierbar, ausgeführt, insbesondere wobei der Sollwerteverlauf in den jeweiligen zeitlichen Bereichen um die Zeitpunkte der Nulldurchgänge herum jeweils glatt, insbesondere also stetig differenzierbar, ausgeführt ist. Von Vorteil ist dabei, dass eine hohe Netzverträglichkeit erreichbar ist.

Bei einer vorteilhaften Ausgestaltung verläuft der Sollwerteverlauf in den Bereichen der Nulldurchgänge, insbesondere in den jeweiligen zeitlichen Bereichen um die Zeitpunkte der Nulldurchgänge herum, jeweils entsprechend einer geraden Potenz einer netzsynchronen Sinusfunktion oder einem Polynom geradzahliger Ordnung entsprechend. Von Vorteil ist dabei, dass ein netzverträglicher Sollwerteverlauf in einfacher Weise

Bei einer vorteilhaften Ausgestaltung verläuft der Sollwerteverlauf zwischen den Bereichen jeweils konstant verläuft. Von Vorteil ist dabei, dass ein stabiles Regelverhalten auftritt.

Bei einer vorteilhaften Ausgestaltung findet jeder Bereich jeweils genau einen einzigen Zeitpunkt umfasst, zu dem ein Nulldurchgang einer der Leiterspannungen statt. Von Vorteil ist dabei, dass ein glattes Verschwinden des Stromsollwertes erreichbar ist.

Bei einer vorteilhaften Ausgestaltung ist die zeitliche Ausdehnung des jeweiligen Bereichs um den jeweiligen Zeitpunkt herum kleiner als der zeitliche Abstand zwischen diesem jeweiligen Zeitpunkt und dem zeitlich direkt darauf nachfolgenden Zeitpunkt. Von Vorteil ist dabei, dass der konstante Sollwert den größten Zeitanteil aufweist und der Einbruch des Sollwertes auf Null nur kurze Zeiträume in Anspruch nimmt.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

In der Figur 1 ist ein erster erfindungsgemäßer Umrichter mit im Zwischenkreis angeordnetem DC/DC-Wandler 102 dargestellt.

In der Figur 2 sind zeitliche Verläufe von Strömen und Spannungen dargestellt.

In der Figur 3 ist einem Umrichter eine erfindungsgemäße Rückspeiseeinheit zugeschaltet.

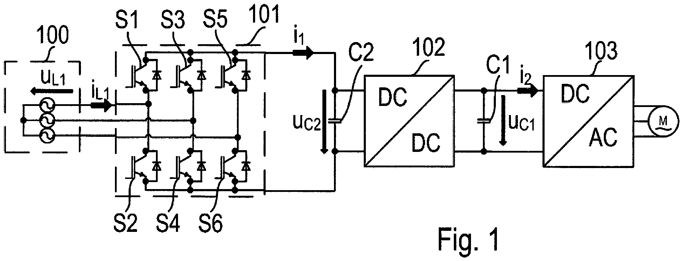

Wie in Figur 1 gezeigt, wird aus einem Wechselspannungsversorgungsnetz 100 ein erster Wechselrichter 101 versorgt, dessen gleichspannungsseitiger Anschluss einen zweiten Anschluss eines DC/DC-Wandlers 102 speist, dessen erster Anschluss mit dem gleichspannungsseitigen Anschluss eines zweiten Wechselrichters 103 verbunden ist, dessen wechselspannungsseitiger Anschluss mit einem als Drehstrommotor ausgeführten Elektromotor M verbunden ist. Somit ist im motorischen Betrieb des Motors M die Drehzahl des Motors regelbar. Hierbei wird keine Spannungswandelung vom DC/DC-Wandler 102 betrieben.

An den Anschlüssen des DC/DC-Wandlers 102 ist jeweils eine Kapazität (C1, C2) angeordnet, so dass eine Glättung der jeweils anliegenden Spannung ausführbar ist.

Im generatorischen Betrieb des Motors M wird die dabei erzeugte Leistung über den zweiten Wechselrichter 103 gleichgerichtet und somit an dessen gleichspannungsseitigem Anschluss zur Verfügung gestellt. Mittels des DC/DC-Wandlers ist der zum ersten Wechselrichter 101 hin geleitete Strom i1 stellbar.

Hierzu werden die drei netzseitigen Phasenspannungen (UL1, UL2, UL3) am wechselspannungsseitigen Anschluss des ersten Wechselrichters 101 erfasst und Zeitpunkte (t1, t2, ..., t6) der Nulldurchgänge der Leiterspannungen bestimmt. Hieraus werden zukünftige Zeitpunkte (t1, t2, ..., t6) vorausberechnet.

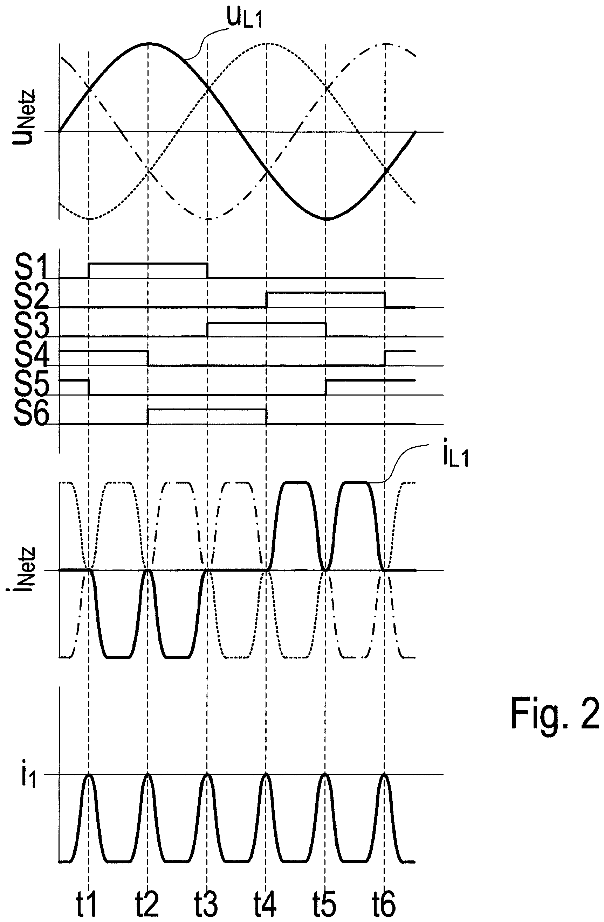

Um eine netzsynchrone blockförmige Rückspeisung zu erreichen, werden die steuerbaren Halbleiterschalter S1, S2, ..., S6 entsprechend angesteuert. Wie in Figur 2 gezeigt, werden die Ansteuersignale netzsynchron angesteuert. Somit ergeben sich die Phasenströme iL1, iL2, iL3.

Erfindungsgemäß wird dem DC/DC-Wandler 102 ein Sollwerteverlauf für den Strom i1 vorgegeben, der nicht konstant ist sondern in den Zeitpunkten der bestimmten Nulldurchgänge verschwindet und in den Zeitbereichen um die bestimmten Nulldurchgänge herum glatt, also stetig differenzierbar verläuft.

Der Sollwerteverlauf des Stromes i1 durchläuft also seine Nullstellen stetig differenzierbar. Zu beachten ist, dass in Figur 2 der Sollwerteverlauf im Wesentlichen negativ ist, da hier der generatorische Fall, also das Rückspeisen, dargestellt ist. Die in zeitlicher Richtung verlaufende, waagerechte Linie stellt den Nullwert dar und tangiert den Sollwerteverlauf des Stromes i1 an den Zeitpunkten t1, t2, t3, t4, t5 und t6. Zu diesen Zeitpunkten sind jeweils zwei der drei netzseitigen Phasenspannungen (UL1, UL2, UL3) gleich. Anders Ausgedrückt, weist an diesen Zeitpunkten jeweils eine der drei Leiterspannungen, also Außenleiterspannungen, einen Nulldurchgang auf.

Insbesondere hat sich als besonders vorteilhaft ein Verlauf erwiesen, der einer geraden Potenz eines Sinus-förmigen Verlaufs entspricht. Vorzugsweise wird also der Verlauf in den Bereichen um die bestimmten Nulldurchgänge herum gemäß

$$a + b * (\sin(n*t))^{\wedge}M$$

verwendet, wobei a, b jeweils konstante Werte sind, n proportional zur Netzfrequenz ist und M vorzugsweise 6 ist. Auch Ausführungen Mit M= 4 oder 8 sind vorteilhaft. Außerhalb der genannten Bereichen ist i1 begrenzt, so dass dort dann ein konstanter Wert vorliegt.

Die Ansteuerung des DC/DC-Wandlers 102 weist dabei eine Taktfrequenz auf, die viel höher ist als die Pulsweitenmodulationsfrequenz des Wechselrichters 103. Somit ist eine sehr hohe charakteristische Regelzeitkonstante erreichbar als bei der Regelung mittels des Wechselrichters 103.

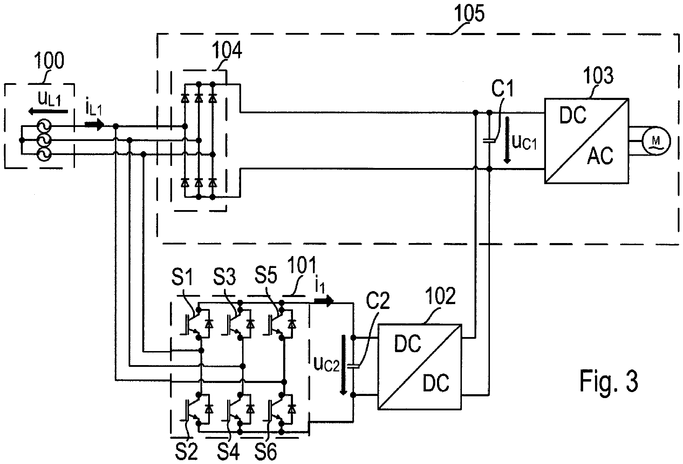

Wie in Figur 3 gezeigt, ist alternativ die Rückspeisung einem Umrichter 105 hinzufügbar. Beispielsweise ist ein Umrichter 105 nachrüstbar mit einer Rückspeisung.

Dabei weist der Umrichter einen Gleichrichter 104 auf, der aus dem Wechselspannungsversorgungsnetz 100 versorgbar ist. Der gleichspannungsseitige Ausgang des Gleichrichters 104 speist einen Kondensator C1 zur Glättung der Spannung, insbesondere Zwischenkreisspannung, wobei der gleichspannungsseitige Eingang des Wechselrichters 103 mit dem gleichspannungsseitigen Ausgang des Gleichrichters 104 verbunden ist. Der als Drehstrommotor ausgeführte Elektromotor M ist wiederum vom Wechselrichter 103 speisbar. Somit ist mittels des Umrichters 105 die Drehzahl des Motors M regelbar.

Außerdem ist der erste, insbesondere gleichspannungsseitige, Anschluss des DC/DC-Wandlers 102 mit dem gleichspannungsseitigen Anschluss des Gleichrichters 104 und/oder des Wechselrichters 103 verbunden. Der zweite Anschluss des DC/DC-Wandlers 102 ist mit dem gleichspannungsseitigen Anschluss des Wechselrichters 101 verbunden, dessen wiederum in Halbbrücken angeordnete steuerbaren Halbleiterschalter in der oben beschriebenen Weise netzsynchron angesteuert werden.

Bei generatorischem Betrieb fließt vom Motor M über den Wechselrichter 103 elektrische Leistung zurück in den Zwischenkreis. Von dort wird dann über den DC/DC-Wandler 102 der rückspeisende erste Wechselrichter 101 gespeist, welcher als blockförmige Rückspeisung den Leistungsfluss netzsynchron steuert.

Zur Regelung des DC/DC-Wandlers wird der gleichspannungsseitige Strom i1 des ersten Wechselrichters 101 erfasst und auf einen Sollwert hin geregelt, indem die Ausgangsspannung UC2 entsprechend gestellt wird. Zur Glättung ist am zweiten Ausgang des DC/DC-Wandlers 102 ein Kondensator C2 angeordnet.

Der Wechselrichter 101 ist vorzugsweise als rückspeisefähiger Gleichrichter ausgeführt, so dass blockförmige Steuerspannungen ausreichen und keine höher frequenten pulsweitenmodulierten Steuerspannungen notwendig sind.

Bei einem weiteren erfindungsgemäßen Ausführungsbeispiel ist statt einer geradzahligen Potenz des Sinus ein Polynom 6-ten oder 8-ten Grades verwendet.

**Bezugszeichenliste**

100 Wechselspannungsversorgungsnetz
101 erster Wechselrichter
102 DC/DC-Wandler
103 zweiter Wechselrichter
104 Gleichrichter
105 Umrichter
UL1 erste Phasenspannung des Wechselspannungsversorgungsnetzes
UL2 zweite Phasenspannung des Wechselspannungsversorgungsnetzes
UL3 dritte Phasenspannung des Wechselspannungsversorgungsnetzes
iL1 erste Netzstromphase
iL2 zweite Netzstromphase
iL3 dritte Netzstromphase
S1 steuerbarer Halbleiterschalter
S2 steuerbarer Halbleiterschalter
S3 steuerbarer Halbleiterschalter
S4 steuerbarer Halbleiterschalter
S5 steuerbarer Halbleiterschalter
S6 steuerbarer Halbleiterschalter
S7 steuerbarer Halbleiterschalter
I1 Ausgangsstrom am gleichspannungsseitigen Anschluss des ersten Wechselrichters 101 UC2 Ausgangsspannung am gleichspannungsseitigen Anschluss des ersten Wechselrichters 101
C1 erste Kapazität
C2 zweite Kapazität
M Elektromotor
I2 Ausgangsstrom am gleichspannungsseitigen Anschluss des zweiten Wechselrichters 101 UC1 Ausgangsspannung am gleichspannungsseitigen Anschluss des zweiten Wechselrichters 101
t1 Zeitpunkt für Nulldurchgang
t2 Zeitpunkt für Nulldurchgang
t3 Zeitpunkt für Nulldurchgang
t4 Zeitpunkt für Nulldurchgang
t5 Zeitpunkt für Nulldurchgang
t6 Zeitpunkt für Nulldurchgang

**Patentansprüche**

1. Verfahren zum Betreiben eines Umrichtersystems, wobei mittels eines DC/DC-Wandlers (102) der von einem rückspeisefähigen Gleichrichter (104) ins 3-Phasen Wechselspannungsversorgungsnetz (100) zugeführte Strom, insbesondere der dem ins Wechselspannungsversorgungsnetz (100) rückspeisenden Wechselrichter (101) zugeführte Strom, auf einen Sollwerteverlauf hin geregelt wird,
**dadurch gekennzeichnet, dass**

- der Sollwerteverlauf an den Zeitpunkten des Nulldurchgangs einer jeweiligen Leiterspannung des 3-Phasen Wechselspannungsversorgungsnetzes und an den Zeitpunkten eines jeweiligen Schnittpunktes der Phasenspannungen eine Nullstelle stetig differenzierbar durchläuft.

2. Verfahren nach Anspruch 1,
**dadurch gekennzeichnet, dass**
der Sollwerteverlauf keine positiven Werte aufweist.

3. Verfahren nach mindestens einem der vorangegangenen Ansprüche,
**dadurch gekennzeichnet, dass**
der Sollwerteverlauf in den Bereichen der Nulldurchgänge jeweils glatt, insbesondere also stetig differenzierbar, ausgeführt ist,
insbesondere wobei der Sollwerteverlauf in den jeweiligen zeitlichen Bereichen um die Zeitpunkte der Nulldurchgänge herum jeweils glatt, insbesondere also stetig differenzierbar, ausgeführt ist.

4. Verfahren nach mindestens einem der vorangegangenen Ansprüche,
**dadurch gekennzeichnet, dass**
der Sollwerteverlauf in den Bereichen der Nulldurchgänge, insbesondere in den jeweiligen zeitlichen Bereichen um die Zeitpunkte der Nulldurchgänge herum, jeweils entsprechend einer geraden Potenz einer netzsynchronen Sinusfunktion oder einem Polynom geradzahliger Ordnung entsprechend verläuft.

5. Verfahren nach mindestens einem der vorangegangenen Ansprüche,
**dadurch gekennzeichnet, dass**
der Sollwerteverlauf zwischen den Bereichen jeweils konstant verläuft.

6. Verfahren nach mindestens einem der vorangegangenen Ansprüche,
**dadurch gekennzeichnet, dass**
jeder Bereich jeweils genau einen einzigen Zeitpunkt umfasst, zu dem ein Nulldurchgang einer der Leiterspannungen stattfindet.

7. Verfahren nach mindestens einem der vorangegangenen Ansprüche,
**dadurch gekennzeichnet, dass**
die zeitliche Ausdehnung des jeweiligen Bereichs um den jeweiligen Zeitpunkt herum kleiner ist als der zeitliche Abstand zwischen diesem jeweiligen Zeitpunkt und dem zeitlich direkt darauf nachfolgenden Zeitpunkt.

**8.** Umrichtersystem mit insbesondere blockförmiger Rückspeisung, aufweisend zumindest

- einen, in ein 3-Phasen Wechselspannungsversorgungsnetz (100), rückspeisefähigen Gleichrichter (104), insbesondere einen ersten rückspeisefähigen Wechselrichter (101),
- einen DC/DC-Wandler (102) mit Ansteuereinheit,
- einen von einem zweiten Wechselrichter (103) speisbaren Elektromotor, wobei ein gleichspannungsseitige Anschluss des zweiten Wechselrichters (103) mit einem ersten Anschluss des DC/DC-Wandlers (102) verbunden ist,

**dadurch gekennzeichnet dass**, ein Stromerfassungsmittel zur Erfassung des von dem DC/DC-Wandler (102) an den gleichspannungsseitigen Anschluss des rückspeisenden ersten Wechselrichters (101) geführten Stromes verbunden ist mit einer Ansteuereinheit,
so, dass die vom Stromerfassungsmittel erfassten Stromwerte der Ansteuereinheit zugeführt werden,
wobei die Ansteuereinheit dazu eingerichtet ist dem DC/DC-Wandler (102) derartige Ansteuersignale zuzuführen, dass die vom DC/DC-Wandler (102) dem rückspeisenden ersten Wechselrichter (101) zur Verfügung gestellte Spannung den erfassten Strom auf einen Sollwerteverlauf hin regelt, wobei der Sollwerteverlauf an den Zeitpunkten des Nulldurchgangs einer jeweiligen Leiterspannung des 3-Phasen Wechselspannungsversorgungsnetzes und an den Zeitpunkten eines jeweiligen Schnittpunktes der Phasenspannungen eine Nullstelle stetig differenzierbar durchläuft.

**9.** Umrichtersystem nach Anspruch 1,
**dadurch gekennzeichnet, dass**
mit der Ansteuereinheit Mittel zur Erfassung der Phasenspannungen des Wechselspannungsversorgungsnetzes (100) verbunden sind,
so dass die Ansteuereinheit zur Bestimmung von Zeitpunkten der Nulldurchgänge der Leiterspannungen geeignet ausgeführt ist und zur Bestimmung des Sollwerteverlaufs,
wobei der Sollwerteverlauf an den Zeitpunkten der Nulldurchgänge verschwindet, insbesondere also den Wert Null erreicht, und/oder in den Bereichen der von der Ansteuereinheit bestimmten Nulldurchgänge jeweils glatt, insbesondere also stetig differenzierbar, ausgeführt ist,
insbesondere wobei der Sollwerteverlauf an den Zeitpunkten der Nulldurchgänge verschwindet, insbesondere also den Wert Null erreicht, und/oder in den jeweiligen zeitlichen Bereichen um die Zeitpunkte der Nulldurchgänge herum jeweils glatt, insbesondere also stetig differenzierbar, ausgeführt ist.

**10.** Umrichtersystem nach mindestens einem der vorangegangenen Ansprüche,
**dadurch gekennzeichnet, dass**
der Sollwerteverlauf in den Bereichen der Nulldurchgänge, insbesondere in den jeweiligen zeitlichen Bereichen um die Zeitpunkte der Nulldurchgänge herum, jeweils entsprechend einer geraden Potenz einer netzsynchronen Sinusfunktion oder einem Polynom geradzahliger Ordnung entsprechend verläuft.

**11.** Umrichtersystem nach mindestens einem der vorangegangenen Ansprüche,
**dadurch gekennzeichnet, dass**
der Sollwerteverlauf zwischen den Bereichen jeweils konstant verläuft.

**12.** Umrichtersystem nach mindestens einem der vorangegangenen Ansprüche,
**dadurch gekennzeichnet, dass**
jeder Bereich jeweils genau einen einzigen Zeitpunkt umfasst, zu dem ein Nulldurchgang einer der Leiterspannungen stattfindet.

**13.** Umrichtersystem nach mindestens einem der vorangegangenen Ansprüche,
**dadurch gekennzeichnet, dass**
das Umrichtersystem einen Gleichrichter (104) aufweist, dessen gleichspannungsseitiger Anschluss ebenfalls mit dem gleichspannungsseitigen Anschluss des zweiten Wechselrichters (103) verbunden ist und dessen wechselspannungsseitiger Anschluss mit dem Wechselspannungsversorgungsnetz (100) verbunden ist.

**14.** Umrichtersystem nach mindestens einem der vorangegangenen Ansprüche,
**dadurch gekennzeichnet, dass**
an dem jeweiligen gleichspannungsseitigen Anschluss ein Kondensator angeordnet ist, insbesondere zur Glättung der Spannung.

**Claims**

**1.** Method for operating a converter system, the current fed into the 3-phase AC voltage supply grid (100) by a regenerative inverter (104), in particular the current fed to the rectifier (101) that backfeeds into the AC voltage supply grid (100), being controlled towards a setpoint characteristic by means of a DC-to-DC converter (102),
**characterised in that**
the setpoint characteristic passes through a zero point in a continuously differentiable manner at the zero crossing times of a particular conductor voltage of the 3-phase AC voltage supply grid and at each intersection time of the phase voltages.

2. Method according to claim 1,
**characterised in that**
the setpoint characteristic has no positive values.

3. Method according to at least one of the preceding claims,
**characterised in that**
the setpoint characteristic is configured to be smooth, in particular therefore continuously differentiable, in the regions of each zero crossing,
the setpoint characteristic in particular being configured to be smooth, in particular therefore continuously differentiable, in the time regions around each zero crossing time.

4. Method according to at least one of the preceding claims,
**characterised in that**
in the zero crossing regions, in particular in the time regions around each zero crossing time, each setpoint characteristic runs in accordance with an even-numbered power of a grid-synchronous sine function or in accordance with a polynomial of an even-numbered order.

5. Method according to at least one of the preceding claims,
**characterised in that**
in each case, the setpoint characteristic runs between the regions in a constant manner.

6. Method according to at least one of the preceding claims,
**characterised in that**
each region comprises exactly one single time at which a zero crossing of one of the conductor voltages occurs.

7. Method according to at least one of the preceding claims,
**characterised in that**
the duration of the region around each time is smaller than the interval between said time and the time that directly follows it in terms of time.

8. Converter system comprising in particular block-like backfeeding,
having at least the following:

  - a rectifier (104) capable of backfeeding into a 3-phase AC voltage supply grid (100), in particular a first regenerative inverter (101),
  - a DC-to-DC converter (102) comprising an actuation unit,

  - an electric motor that can be powered by a second inverter (103),

  a DC-voltage-side terminal of the second inverter (103) being connected to a first terminal of the DC-to-DC converter (102),
  **characterised in that**
  a current detection means for detecting the current conducted to the DC-voltage-side terminal of the backfeeding first inverter (101) by the DC-to-DC converter (102) is connected to an actuation unit such that the current values detected by the current detection means are fed to the actuation unit,
  the actuation unit being configured to feed to the DC-to-DC converter (102) actuation signals of such a kind that the voltage provided to the backfeeding first inverter (101) by the DC-to-DC converter (102) controls the detected current towards a setpoint characteristic, the setpoint characteristic passing through a zero point in a continuously differentiable manner at the zero crossing times of a particular conductor voltage of the 3-phase AC voltage supply grid and at each intersection time of the phase voltages.

9. Converter system according to claim 1,
**characterised in that**
means for detecting the phase voltages of the AC voltage supply grid (100) are connected to the actuation unit,
such that the actuation unit is configured to be capable of determining zero crossing times of the conductor voltages and of determining the setpoint characteristic,
the setpoint characteristic vanishing at the zero crossing times, in particular therefore reaching the value zero, and/or being configured to be smooth, in particular therefore continuously differentiable, in the regions of the zero crossings determined by the actuation unit,
the setpoint characteristic in particular vanishing at the zero crossing times, in particular therefore reaching the value zero, and/or being configured to be smooth, in particular therefore continuously differentiable, in the time regions around each zero crossing time.

10. Converter system according to at least one of the preceding claims,
**characterised in that**
in the zero crossing regions, in particular in the time regions around each zero crossing time, each setpoint characteristic runs in accordance with an even-numbered power of a grid-synchronous sine function or in accordance with a polynomial of an even-numbered order.

11. Converter system according to at least one of the preceding claims,

**characterised in that**
in each case, the setpoint characteristic runs between the regions in a constant manner.

12. Converter system according to at least one of the preceding claims,
**characterised in that**
each region comprises exactly one single time at which a zero crossing of one of the conductor voltages occurs.

13. Converter system according to at least one of the preceding claims,
**characterised in that**
the converter system has a rectifier (104), the DC-voltage-side terminal of which is also connected to the DC-voltage-side terminal of the second inverter (103), and the AC-voltage-side terminal of which is connected to the AC voltage supply grid (100).

14. Converter system according to at least one of the preceding claims,
**characterised in that**
a capacitor is arranged at the particular DC-voltage-side terminal, in particular to smooth the voltage.

**Revendications**

1. Procédé pour faire fonctionner un système de variateur, dans lequel, au moyen d'un convertisseur continu-continu (102), le courant amené au réseau d'alimentation en tension alternative triphasée (100) par un redresseur capable de réinjection (104), en particulier le courant amené à l'onduleur (101) qui réinjecte de l'énergie dans le réseau d'alimentation en tension alternative (100), est régulé sur une courbe de valeurs de consigne,
**caractérisé en ce**
**que** la courbe de valeurs de consigne passe par un point zéro continuellement différentiable aux instants du passage par zéro d'une tension de conducteur respective du réseau d'alimentation en tension alternative triphasée et aux instants d'une intersection respective des tensions de phase.

2. Procédé selon la revendication 1,
**caractérisé en ce**
**que** la courbe de valeurs de consigne ne présente pas de valeurs positives.

3. Procédé selon au moins l'une des revendications précédentes,
**caractérisé en ce**
**que** la courbe de valeurs de consigne est lisse, en particulier donc continuellement différentiable, dans chacune des plages des passages par zéro, en particulier la courbe de valeurs de consigne étant lisse, en particulier donc continuellement différentiable, dans chacune des plages de temps respectives autour des instants des passages par zéro.

4. Procédé selon au moins l'une des revendications précédentes,
**caractérisé en ce**
**que** dans chacune des plages des passages par zéro, en particulier dans chacune des plages de temps respectives autour des instants des passages par zéro, la courbe de valeurs de consigne s'étend selon une puissance paire d'une fonction sinusoïdale synchrone au réseau ou selon un polynôme d'ordre pair.

5. Procédé selon au moins l'une des revendications précédentes,
**caractérisé en ce**
**que** la courbe de valeurs de consigne a un profil constant entre les plages.

6. Procédé selon au moins l'une des revendications précédentes,
**caractérisé en ce**
**que** chaque plage comprend chaque fois exactement un seul instant auquel un passage par zéro d'une des tensions de conducteur a lieu.

7. Procédé selon au moins l'une des revendications précédentes,
**caractérisé en ce**
**que** l'étendue temporelle de la plage respective autour de l'instant respectif est inférieure à la distance temporelle entre cet instant respectif et l'instant qui le suit directement dans le temps.

8. Système de variateur avec, en particulier, une réinjection d'énergie en forme de bloc,
présentant au moins

  - un redresseur capable de réinjection (104), en particulier un premier onduleur capable de réinjection (101) dans un réseau d'alimentation en tension alternative triphasée (100),
  - un convertisseur continu-continu (102) avec une unité de commande,
  - un moteur électrique pouvant être alimenté par un deuxième onduleur (103),

dans lequel une borne côté tension continue du deuxième onduleur (103) est reliée à une première borne du convertisseur continu-continu (102),
**caractérisé en ce**
**qu'**un moyen de détection de courant pour détecter le courant amené par le convertisseur continu-continu (102) à la borne côté tension continue du premier onduleur capable de réinjection (101) est relié à une unité de commande,
de sorte que les valeurs de courant détectées par le moyen de détection de courant sont amenées à l'unité de commande,

l'unité de commande étant conçue pour amener au convertisseur continu-continu (102) des signaux de commande de telle sorte que la tension mise à disposition par le convertisseur continu-continu (102) au premier onduleur capable de réinjection (101) régule le courant détecté sur une courbe de valeurs de consigne, la courbe de valeurs de consigne passant par un point zéro continuellement différentiable aux instants du passage par zéro d'une tension de conducteur respective du réseau d'alimentation en tension alternative triphasée et aux instants d'une intersection respective des tensions de phase.

9. Système de variateur selon la revendication 1,
   **caractérisé en ce**
   **que** des moyens pour détecter les tensions de phase du réseau d'alimentation en tension alternative (100) sont reliés à l'unité de commande,
   de sorte que l'unité de commande est réalisée de manière appropriée pour déterminer les instants des passages par zéro des tensions de conducteur et pour déterminer la courbe de valeurs de consigne,
   dans lequel la courbe de valeurs de consigne disparaît, en particulier donc atteint la valeur zéro, aux instants des passages par zéro et/ou est lisse, en particulier donc continuellement différentiable, dans chacune des plages des passages par zéro déterminés par l'unité de commande,
   dans lequel, en particulier, la courbe de valeurs de consigne disparaît, en particulier donc atteint la valeur zéro, aux instants des passages par zéro, et/ou est lisse, en particulier donc continuellement différentiable, dans chacune des plages de temps respectives autour des instants des passages par zéro.

10. Système de variateur selon au moins l'une des revendications précédentes,
    **caractérisé en ce**
    **que** dans chacune des plages des passages par zéro, en particulier dans chacune des plages de temps respectives autour des instants des passages par zéro, la courbe de valeurs de consigne s'étend selon une puissance paire d'une fonction sinusoïdale synchrone au réseau ou selon un polynôme d'ordre pair.

11. Système de variateur selon au moins l'une des revendications précédentes,
    **caractérisé en ce**
    **que** la courbe de valeurs de consigne a un profil constant entre les plages.

12. Système de variateur selon au moins l'une des revendications précédentes,
    **caractérisé en ce**
    **que** chaque plage comprend chaque fois exactement un seul instant auquel un passage par zéro d'une des tensions de conducteur a lieu.

13. Système de variateur selon au moins l'une des revendications précédentes,
    **caractérisé en ce**
    **que** le système de variateur présente un redresseur (104) dont la borne côté tension continue est également reliée à la borne côté tension continue du deuxième onduleur (103) et dont la borne côté tension alternative est reliée au réseau d'alimentation en tension alternative (100).

14. Système de variateur selon au moins l'une des revendications précédentes,
    **caractérisé en ce**
    **qu'**un condensateur est disposé au niveau de la borne côté tension continue respective, en particulier pour lisser la tension.

Fig. 1

Fig. 2

Fig. 3

**IN DER BESCHREIBUNG AUFGEFÜHRTE DOKUMENTE**

**In der Beschreibung aufgeführte Patentdokumente**

- DE 102012002089 A1
- DE 102014222475 A1
- DE 102011017601 A1
- DE 102015113632 A1
- EP 1538736 A2
- DE 102005042318 A1